**Europäisches Patentamt**

**European Patent Office**

**Office européen des brevets**

(19)

(11) Veröffentlichungsnummer : **0 386 755 B1**

(12) # EUROPÄISCHE PATENTSCHRIFT

(45) Veröffentlichungstag der Patentschrift :
**03.11.93 Patentblatt 93/44**

(51) Int. Cl.$^5$ : **C04B 18/10**

(21) Anmeldenummer : **90104437.0**

(22) Anmeldetag : **08.03.90**

(54) **Verfahren zur Herstellung von Beton und nach dem Verfahren hergestellter Frischbeton.**

(30) Priorität : **10.03.89 DE 3907809**

(43) Veröffentlichungstag der Anmeldung :
**12.09.90 Patentblatt 90/37**

(45) Bekanntmachung des Hinweises auf die
Patenterteilung :
**03.11.93 Patentblatt 93/44**

(84) Benannte Vertragsstaaten :
**AT BE CH DE FR IT LI NL**

(56) Entgegenhaltungen :
**DE-A- 1 771 879**
**DE-A- 2 458 265**
**DE-A- 3 441 244**

(73) Patentinhaber : **Becker, Uwe**
**Westring 98**
**D-46242 Bottrop (DE)**
Patentinhaber : **Becker, Heinrich**
**Augustin-Wibbelt-Strasse 16**
**D-46242 Bottrop (DE)**

(72) Erfinder : **Becker, Uwe**
**Westring 98**
**D-46242 Bottrop (DE)**
Erfinder : **Becker, Heinrich**
**Augustin-Wibbelt-Strasse 16**
**D-46242 Bottrop (DE)**

(74) Vertreter : **Bauer, Wulf, Dr.**
**Bayenthalgürtel 15**
**D-50968 Köln (Marienburg) (DE)**

EP 0 386 755 B1

## Beschreibung

Die Erfindung bezieht sich auf ein Verfahren zur Herstellung von Beton aus Zement, Wasser und einem Zuschlag.

Aus der DE-A-2 458 265 ist ein Verfahren zur Herstellung von Verkehrswegen unter Verwendung von Rückständen aus Trockenfeuerungen, insbesondere Müllasche, bekannt. Dabei wird aus den getrockneten Rückständen durch Zugabe eines Bindemittels, z. B. Zement, ein Mörtel gebildet. Aus der DE-A-3 441 244 ist ein Verfahren bekannt, Schlacke aus Müllverbrennungsanlagen deponierbar zu machen. Die Schlacke wird mehlfein gemahlen und mit einem Bindemittel sowie Wasser vermischt, diese Mischung erhärtet.

Unter Zuschlag (Zuschlagstoff) werden in der Bautechnik Stoffe verstanden, die bei der Herstellung von Mörtel oder Beton dem Bindemittel zugegeben werden, beispielsweise Sand, Kies, Blähton, Naturbims und dergleichen. Üblicherweise werden derartige Zuschläge aus natürlichen Lagervorkommen, beispielsweise Kiesgruben, abgebaut. Neben natürlich vorkommenden Zuschlagstoffen sind als Zuschläge auch industriell oder anderweitig vom Menschen hergestellte Stoffe eingesetzt worden, beispielsweise Aschen. Es hat sich aber herausgestellt, daß eine Betonherstellung mit Asche als Zuschlagstoff, insbesondere ausschließliche Verwendung von Asche als Zuschlagstoff, nicht zu befriedigenden Ergebnissen führte.

Die Erfindung hat es sich zur Aufgabe gemacht, einen Zuschlagstoff für einen Beton anzugeben, der aus Asche hergestellt ist und als überwiegender, vorzugsweise ausschließlicher Zuschlag in Betonen eingesetzt werden kann.

Diese Aufgabe wird gelöst durch ein Verfahren nach den Merkmalen des Patentanspruchs 1.

Es hat sich überraschend herausgestellt, daß ein derartig hergestellter Zuschlag ein vollwertiger Ersatz für die anerkannten Zuschläge, beispielsweise Sand und Kies ist. Die Rostasche stammt aus Müllverbrennungsanlagen, beispielsweise Müllheizkraftwerken, bei denen die Verbrennungstemperatur möglichst hoch ist, vorzugsweise im Bereich von 1100 bis 1200 °C liegt. Vorzugsweise werden Rostasche und Flugasche (insbesondere Filterasche) bereits in der Anlage separiert. Erfolgt dies nicht durch den Betreiber der Anlage selbst, wird die staubförmige Flugasche durch entsprechende Maßnahmen, zum Beispiel Wäsche, insbesondere in einem geschlossenen Waschverfahren nach dem Prinzip des Schwerewassers, entfernt. In der Rostasche ist nur ein geringer Teil Schadstoffe enthalten, die Schadstoffe sammeln sich bevorzugt in der Flugasche. Dennoch in der Rostasche vorhandene Schadstoffe sind zumeist im Pulverbestandteil der Rostasche enthalten, dieser wird jedoch bei der Wäsche, die vorzugsweise in einer Waschtrommel stattfindet, entfernt und als Schlamm abgezogen. Sonstige Fremdstoffkomponenten, wie beispielsweise Holz, Kunststoff-, Gummi-, Nichteisenmetallteile und dergleichen reichern sich vorzugsweise in der Fraktion mit einer Körnung oberhalb der Obergrenze der grobkörnigen Fraktion, also beispielsweise oberhalb 24 mm Korndurchmesser, an, sie werden damit im Rahmen der Klassierung aussortiert und sind nicht Bestandteil des Zuschlages.

Bei der Betonherstellung wird das Mischungsverhältniss zwischen feinkörnigen Fraktion und grobkörniger Fraktion jeweils in Abhängigkeit von der gewünschten Betonqualität vorgegeben. Eine Klassierung in zwei Körnungen hat sich als sehr vorteilhaft erwiesen, eine Klassierung in drei oder mehr Körnungen ist hierdurch jedoch nicht ausgeschlossen, insbesondere ist es möglich, die feinkörnige oder die grobkörnige Fraktion weiter zu unterteilen. Entscheidend ist lediglich, daß die obere Grenze der Körnung im Bereich von Kieskorn liegt, vorzugsweise im Bereich von 20 bis 30 mm Körnung. Aufgrund der Abtrennung der Flugasche und durch das Entschlämmen im Wasserbad ist in der aufbereiteten Rostasche nur noch Material mit einer Körnung oberhalb 0,03 mm enthalten.

Als sehr vorteilhaft erweist sich das im Vergleich zu dem üblichen Zuschlagstoff Sand deutlich geringere spezifische Gewicht der aufbereiteten Rostasche, dies macht sich sehr positiv im Gewicht des Frischbetons und des Festbetons bemerkbar, die Raumgewichte liegen deutlich unterhalb der Raumgewichte üblicher Betone. Das Raumgewicht von Reinsand liegt typischerweise zwischen 1,8 und 2 g pro ccm, während die aufbereitete Rostasche typischerweise ein spezifisches Gewicht von etwa 1,25 bis 1,28 g pro ccm hat. Da der Zuschlag mengenmäßig im allgemeinen den größten Anteil im Beton hat, wird das Gewicht von Betonbauteilen bei Verwendung aufbereiteter Rostasche gegenüber herkömmlichen Betonteilen deutlich verringert, obwohl die sonstigen Werte, insbesondere die Druckfestigkeit, ungeändert bleibt.

Als besonders vorteilhaft ist anzusehen, daß aus den Verbrennungsrückständen von Hausmüll, also einem Abfallprodukt, ein Wirschaftsgut gewonnen werden kann, das als Zuschlag in Betonen hervorragende Eigenschaften hat und ohne Belastung der Umwelt eingesetzt werden kann. Da im Rahmen der Müllverbrennung große Mengen an Rostasche anfallen und die Rostasche in irgend einer Form entsorgt und beseitigt werden muß, bietet sich das erfindungsgemäße Verfahren insofern auch als ein Beitrag zur Reduzierung der Abfallhalden und Entsorgung an.

Als vorteilhaft hat sich der Kalkgehalt in der aufbereiteten Rostasche erwiesen. Er trägt dazu bei, daß Bindemittel im Beton eingespart wird oder eine höhere Festigkeit, insbesondere Druckfestigkeit, bei gleicher Bin-

2

demittelzugabe (im Vergleich zu Sand bzw. Kies als Zuschlag) erzielt wird. Die aufbereitete Rostasche zeigt ein Abbindeverhalten, wenn sie mit Wasser vermischt wird. Um diesen Effekt für die Abbindung im Beton zu nutzen, wird es vorgeschlagen, die Rostasche nach der Wäsche möglichst nicht in Verbindung mit Wasser zu bringen. Eine regengeschützte Lagerung der Rostasche während der Aufbereitung und nach der Aufbereitung hat sich als vorteilhaft erwiesen. Bei einer Lagerung im Freien stellt sich jedoch heraus, daß durch Regenwasser lediglich eine obere Schicht eines Vorratshaufwerkes abbindet, während die unter der Oberflächenschicht liegende Menge an Rostasche durch die Oberflächenschicht vom Wasserzutritt weitgehend geschützt ist. Es hat sich daher als vorteilhaft erwiesen, möglichst große Vorratshaufwerke zu bilden. Die Abbindung von Oberflächenschichten derartiger Vorratshaufwerke durch Oberflächenwasser, insbesondere Regen, bringt den Vorteil, daß eine schützende Schicht über das Vorratshaufwerk gezogen wird, so daß die Asche nicht mehr durch Wind weggeblasen und wegtransportiert werden kann.

Nach dem Entschlämmen wird die Rostasche zwischengelagert. Während der Zwischenlagerung finden Ausgleichsvorgänge statt, insbesondere kann die Schlacke ausblühen. Der Ausblühvorgang ist daran erkenntlich, daß die Körner sich mit einer grauweißlichen, pulverartigen Schicht, die von der Oberfläche der Körner leicht weggewischt werden kann, überzogen sind. Während des Ausblühens wird Wärme freigesetzt, das Ausblühen ist ein exothermer chemischer Vorgang. Die Beendigung des Ausblühvorgangs kann durch Temperaturabfall der Reaktion, durch Inspektion der einzelnen Körner, also Nachweis der staubförmigen grauweißen Schicht erfolgen. Im allgemeinen ist das Ausblühen nach zumindest vierwöchiger Lagerung, insbesondere nach mindestens sechswöchiger Lagerung abgeschlossen. Da das Ausblühen mit einer Volumenzunahme verbunden ist, muß es im wesentlichen abgeschlossen sein, bevor die Rostaschekörner als Zuschlag in Betone einegesetzt werden.

In vorteilhafter Weiterbildung der Erfindung wird vorgeschlagen, daß die Rostasche vor der Fraktionierung homogenisiert wird. Dies geschieht im allgemeinen durch Mischung der Rostaschen, die zu unterschiedlichen Zeiten bei der Müllverbrennung anfallen oder von Rostaschen getrennter Müllverbrennungskessel. Durch die Homogenisierung wird erreicht, daß die aufbereitete Asche besser verarbeitet werden kann, die Sieblinien besser eingehalten werden und ungewollte Konzentrationen von Stoffen, zu denen auch Schadstoffe gehören könnten, vermieden werden. Eine Homogenisierung findet bereits bei der Aufbereitung der Asche im Rahmen der dabei anfallenden Vorgänge, beispielsweise beim Transport, bei der Siebung usw. statt.

Als vorteilhaft hat es sich erwiesen, vor dem Fraktionieren Metalle abzuscheiden, insbesondere einen Magnetabscheider vorzusehen. Ferromagnetische Metalle, die auf diese Weise abgeschieden werden, also insbesondere Eisen und Stahl, sind zwar grundsätzlich nicht schädlich im Beton, in oberflächennahen Schichten eines Betonkörpers könnten sie jedoch bei Wasserzutritt rosten und durch die damit verbundene Volumenzunahme ein Abplatzen bewirken. Die Magnetabscheidung beseitigt derartige Nachteile.

Als vorteilhaft hat es sich erwiesen, eine Rostasche (Müllverbrennungsasche) als Zuschlagstoff einzusetzen, die mindestens 65 % Schlackenanteil, mindestens 10 % Glas- und Keramikanteil, maximal 5 % Metallanteil und maximal einen Anteil von 5 % an Unverbranntem aufweist, alle Prozentangaben in Gewichtsprozent.

Weiterhin hat es sich als besonders vorteilhaft herausgestellt, bei der Herstellung von Frischbeton aus Zement, Wasser und aufbereiteted Rostasche während des Mischvorgangs ein Betonzusatzmittel in den Zwangsmischer feinverteilt einzuleiten. Als besonders günstig hat sich ein Luftporenbildner und/oder Betonverzögerer gezeigt, beispielsweise in einem Anteil von einem Gewichtsprozent (bezogen auf die Gesamtmischung) zugegeben wird. Dabei hat es sich als entscheidend herausgestellt, das Zusatzmittel intensiv in der Mischung zu verteilen. Dies kann vorteilhafterweise dadurch erreicht werden, daß das Zusatzmittel mit einem Druckluftstoß, beispielsweise über einen Kompressor, unmittelbar in den Mischraum des Zwangsmischers eingeleitet wird.

Der erfindungsgemäße Beton enthält als Zuschlag zumindest 20 % der feinkörnigen Fraktion, der Rest des Zuschlages wird durch die grobkörnige Fraktion gebildet.

Weitere Vorteile und Merkmale der Erfindung ergeben sich aus den übrigen Ansprüchen sowie der nun folgenden Beschreibung von Ausführungsbeispielen.

Die praktischen Beispiele wurden mit Rostasche aus dem Müllheizkraftwerk Essen/Karnap durchgeführt, dieses Müllheizkraftwerk ist eine der modernsten Anlagen dieses Typs und wird seit Februar 1987 betrieben. Die anfallende Flugasche wird auf vollständig getrenntem Wege von der Rostasche entsorgt.

Die aus dem Verbrennungskessen kommende Rostasche durchläuft eine Waschtrommel, dort wird sie abgeschreckt, die Feinbestandteile verbleiben als Schlamm, die sonstigen Bestandteile werden entnommen und zunächst zwischengelagert. Die Zwischenlagerung erfolgt über zumindest vier, vorzugsweise sechs Wochen und hat nicht nur im Hinblick auf die Vorratshaltung eine Bedeutung, sondern ist auch wichtig, weil die Lagerung einerseits die Raumbeständigkeit und andererseits die Gleichmäßigkeit der stofflichen Qualität beeinflußt.

Die Aufbereitung besteht aus einer Magnetabscheidung und Siebanlagen. Die Siebanlagen erzeugen die Körnungen 0/12 mm, 0/22 mm und grobere Körnungen. Da insbesondere Fremdstoffkomponenten wie Holz, Kunststoff, Gummi, Nichteisenmetalle und dergleichen sich in der Fraktion oberhalb 22 mm anreichern, haben die Klassierungen auf den sieben 22 mm und 25 mm zugleich einen beträchtliche Sortierungseffekt.

Bei zwei untersuchten Proben der unterschiedlichen Klassierung wurden folgende Anteile festgestellt:

|  | Probe 0/12 Gew.% | Probe 0/22 Gew.% |
|---|---|---|
| Asche (Schlacke) | 75 | 70 |
| Glas und Keramik | 20 | 25 |
| Metalle | 3 | 3 |
| Sonstiges (mineralische Faserstoffe usw.) | 1,5 | 1,5 |
| Unverbranntes | 0,3 | 0,3 |

Die Korngrößenverteilung der betreffenden Proben wurde durch Naßsiebung ermittelt, sie sind in der folgenden Tabelle zusammengestellt:

| Körnung | Kornanteile | | | |
|---|---|---|---|---|
| | Probe 0/12 | | Probe 0/22 | |
| | Gew.% | $\Sigma$Gew.% | Gew.% | $\Sigma$Gew.% |
| > 22,4 | – | – | – | – |
| 16,0 – 22,4 | – | – | 10,8 | 100,0 |
| 12,0 – 16,0 | – | – | 20,1 | 89,2 |
| 8,0 – 12,0 | 29,8 | 100,0 | 28,1 | 69,1 |
| 4,0 – 8,0 | 37,7 | 70,2 | 16,4 | 41,0 |
| 2,0 – 4,0 | 11,7 | 32,5 | 6,6 | 24,6 |
| 1,0 – 2,0 | 7,7 | 20,8 | 4,4 | 18,0 |
| 0,5 – 1,0 | 1,3 | 13,1 | 3,4 | 13,6 |
| 0,25 – 0,5 | 3,7 | 11,8 | 3,6 | 10,2 |
| 0,125 – 0,25 | 2,7 | 8,1 | 2,2 | 6,6 |
| 0,063 – 0,125 | 1,6 | 5,4 | 1,3 | 4,4 |
| < 0,063 | 3,8 | 3,8 | 3,1 | 3,1 |

Die Schüttdichte der Probe 0/12 mm wurde mit 1,26 g pro ccm ermittelt, die Schüttdichte der Probe 0/22 betrug 1,28 g pro ccm.

Beispiel 1:

4 Teile aufbereiteter Rostasche mit 80 % feinkörniger und 20 % grobkörniger Fraktion werden vermischt mit einem Teil Zement PZ 375 und ca. 0,5 Teilen Wasser, im Zwangsmischer wird ein Gewichtsprozent bezogen auf den Frischbeton einer Mischung aus Centricell 83 und Murasit-Retard in gleichen Teilen über einen Druckluftstoß eingegeben. Nach Lagerung für 7 Tage in Wasser und 32 Tage an Luft wurde bei einem Probekörper eine Druckfestigkeit von 182 kg pro cm$^2$ festgestellt.

4

Beispiel 2:

1 Teil Zement HOZ 375 und 4 Teile aufbereiteter Rostasche bestehend aus 50 % Körnungsband 0/12 mm und 50 % Körnungsband 0/24 mm werden mit 0,5 Teilen Wasser vermischt, in den Zwangsmischer wird mittels Druckluftstoß ein Gemisch aus gleichen Teilen Murasit-Mischöl und Murasit-Retard eingegeben, die erhaltenen Festbeton-Prüfkörper weisen nach 7 Tage Lagerung in Wasser und 36 Lagerung in Luft eine Druckfestigkeit von 139 kg pro cm$^2$ auf.

Centricell und Murasit sind Produkte der MC-Bauchemie und bezeichnungsmäßig geschützt.

Bei Müllverbrennungsanlagen, bei denen die Flugasche separat anfällt, ist es vorteilhaft, wenn die noch heiße Asche in das Wasserbad gegeben wird, also die Asche im Wasserbad abgeschreckt wird.

Die Zwischenlagerung erfolgt bei normalen mitteleuropäischen Außentemperaturen, es werden keine besonderen Mittel zugegeben. Für die Zwischenlagerung werden die klassifizierten oder noch nicht klassifizierten Aschen auf einem glatten Untergrund gelagert, der ein geringes Gefälle von beispielsweise 3 % hat. Dadurch wird vermieden, daß sich Wasser in dem zwischengelagerten Material ansammeln kann. In einem Tiefpunkt der Lagerfläche wird das Restwasser aus der Wäsche und das Niederschlagswasser gesammelt und abgeleitet. Durch eine Temperatursonde, beispielsweise ein Thermoelement, das in das Innere einer Menge des zwischengelagerten Materials gesteckt wird, wird der Ablauf der Ausblühreaktion verfolgt.

**Patentansprüche**

1. Verfahren zur Herstellung von Beton aus Zement, Wasser und einem aschehaltigen Zuschlag, dadurch gekennzeichent, daß als Zuschlag Rostasche von Müllverbrennungsanlagen, bei denen die Verbrennung bei Temperaturen von vorzugsweise 1100 bis 1200 °C erfolgt, eingesetzt wird, daß die Rostasche separat von der Flug-, insbesondere Filterasche anfällt oder von dieser separiert wird, daß die Rostasche in einem Wasserbad, vorzugsweise einer Waschtrommel, gewaschen und entschlämmt wird, daß die Rostasche fraktioniert wird in eine feinkörnige Fraktion mit 0/12 mm Körnungsband und eine grobkörnige Fraktion mit 0/24 mm Körnungsband und eine Fraktion mit darüberliegender Körnung, daß der Zuschlag aus einem Gemisch der feinkörnigen und der grobkörnigen Fraktion erstellt wird, daß die Rostasche vor oder nach der Fraktionierung solange zwischengelagert wird, bis das Ausblühen der Körner im wesentlichen (etwa zu 90 %) abgeschlossen ist, und daß der Zuschlag des Betons von zumindest 20 % der feinkörnigen Fraktion, der Rest des Zuschlages durch die grobkörnige Fraktion gebildet ist.

2. Verfahren nach Anspruch 1, dadurch gekennzeichnet, daß die Rostasche vor der Fraktionierung homogenisiert wird.

3. Verfahren nach Anspruch 1 oder 2, dadurch gekennzeichnet, daß die Rostasche vor der Fraktionierung zwischengelagert wird für zumindest 4, vorzugsweise zumindest 6 oder 8 Wochen.

4. Verfahren nach einem der Ansprüche 1 bis 3, dadurch gekennzeichnet, daß vor dem Fraktionieren Metalle abgeschieden werden, insbesondere ein Magnetabscheider vorgesehen ist.

5. Verfahren nach einem der Ansprüche 1 bis 4, dadurch gekennzeichnet, daß eine Asche mit mindestens 65 % Schlackenanteil, mindestens 10 % Glas- und Keramikanteil, maximal 5 % Metallanteil und maximal 0,5 %-Anteilen an Unverbranntem eingesetzt wird, alle Angaben in Gewichtsprozent.

6. Verfahren nach einem der Ansprüche 1 bis 5, dadurch gekennzeichnet, daß die Rostasche trocken zwischengelagert wird.

7. Verfahren nach einem der Ansprüche 1 bis 6, dadurch gekennzeichnet, daß die feinkörnige Fraktion 13 Gewichtsprozente einer Körnung unterhalb 1 mm aufweist, 20 Gewichtsprozente einer Körnung 1 bis 4 mm aufweist, 38 Gew.-% einer Körnung 4 bis 8 mm aufweist und der Rest der Körnung zwischen 8 und 12 mm liegt, und daß der grobkörnige Bestandteil 13 Gewichtsprozent bis 1 mm aufweist, 11 Gewichtsprozente der Körnung 1 bis 4 mm aufweist, 16 Gewichtsprozent der Körnung 4 bis 8 mm aufweist und der restliche Kornanteil darüberliegt.

8. Verfahren nach einem der Ansprüche 1 bis 7, dadurch gekennzeichnet, daß dem Frischbeton im Zwangsmischer über einen Druckluftstoß ein Betonzusatzmittel zugegeben wird, das vorzugsweise aus einem Luftporenbildner und/oder einem Verzögerer besteht, wobei der Anteil des Zusatzmittels 0,5 bis 2 Gew.-

% des Frischbetons beträgt.

9. Verfahren nach einem der Ansprüche 1 bis 8, dadurch gekennzeichnet, daß der Verlauf und der weitgehende Abschluß des Ausblühvorgangs durch Erfassen der Temperatur im Inneren einer zwischengelagerten Rostaschemenge und/oder durch Beobachten des Ausblühvorgangs an Proben verfolgt wird.

10. Verfahren nach einem der Ansprüche 1 bis 9, dadurch gekennzeichnet, daß beim Entschlämmen im Wasserbad staubförmige Teile mit einer Körnung unterhalb von 50, vorzugsweise unterhalb von 30 Mikrometer abgetrennt werden.

## Claims

1. Process for the production of concrete from cement, water and an additive containing ash, characterised by the fact that the ash used as an additive is heavy ash from waste incineration plants where incineration is preferably performed at temperatures between 1100° and 1200° C, where the heavy ash is produced separately from the fly ash and in particular separately from the filter ash, or where the heavy ash is separated from the fly/filter ash, and by the fact that the heavy ash is washed and desludged in a water bath, preferably in a drum washer, and by the fact that the heavy ash is graded into a fine-grained fraction with a particle size range of 0/12 mm, a coarse-grained fraction with a particle size range of 0/24 mm and a fraction with particles of larger size, and by the fact that the additive is made of a mixture of the fine-grained and the coarse-grained fraction, and by the fact that the heavy ash is put into temporary storage before or after the grading process for such a period until the efflorescence formation on the particles is virtually completed (around 90 %), and by the fact that at least 20 percent of the additive for the concrete consists of the fine-grained fraction, the remainder consisting of the coarse-grained fraction.

2. Process as claimed in Claim 1, characterised by the fact that the heavy ash is homogenised before being graded.

3. Process as claimed in Claims 1 or 2, characterised by the fact that the heavy ash is put into temporary storage for at least 4 weeks before grading, and preferably for at least 6 or 8 weeks.

4. Process as claimed in any of the Claims 1 through 3, characterised by the fact that metals are separated out before grading, and in particular by use of a magnetic metal separator.

5. Process as claimed in any of the Claims 1 through 4, characterised by the fact that an ash is used containing at least 65 percent slag, at least 10 percent glass and ceramics, a maximum of 5 percent metal and a maximum of 0.5 percent of unburned matter, all figures in percent by weight.

6. Process as claimed in any of the Claims 1 through 5, characterised by the fact that the temporary storage of the heavy ash is dry.

7. Process as claimed in any of the Claims 1 through 6, characterised by the fact that the fine-grained fraction contains 13 percent by weight of particles smaller than 1 mm, 20 percent by weight of particles from 1 to 4 mm and 38 percent by weight of particles from 4 to 8 mm, and that the rest of the particles are between 8 and 12 mm, and by the fact that the coarse-grained fraction contains 12 percent by weight of particles up to 1 mm, 11 percent by weight of particles between 1 and 4 mm and 16 percent by weight of particles between 4 and 8 mm, and that the rest of the particles are larger than this.

8. Process as claimed in any of the Claims 1 through 7, characterised by the fact that a concrete additive is added to the fresh concrete in the concrete mixer by means of a blast of compressed air, said concrete additive consisting preferably of an air-entraining agent and/or a retarding agent, the additive comprising 0.5 to 2 percent by weight of the fresh concrete.

9. Process as claimed in any of the Claims 1 through 8, characterised by the fact the extensive completion of the efflorescence formation process is monitored by measuring the temperature inside a quantity of stored heavy ash and/or by observation of the efflorescence formation process on samples.

10. Process as claimed in any of the Claims 1 through 9, characterised by the fact that in the water-bath desludging process, dustlike particles with a particle size smaller than 50 micrometres, and preferably smaller than 30 micrometres, are separated out.

**Revendications**

1. Procédé de production de béton constitué de ciment, d'eau et d'un adjuvant à teneur en cendres, caractérisé par le fait que l'adjuvant utilisé consiste en des cendres de rouille provenant d'installations d'incinération des ordures où l'incinération se fait de préférence à des températures comprises entre 1100 et 1200° C, que les cendres de rouille sont produites séparément des cendres volantes et notamment des cendres de filtre ou qu'elles sont séparées de ces dernières, que les cendres de rouille sont lavées et débourbées dans un bain d'eau, de préférence dans un tambour de lavage, qu'elles sont fractionnées en une fraction fine avec une granulométrie de 0/12 mm, en une fraction grossière avec une granulométrie de 0/24 mm et en une fraction de granulométrie supérieure à ces deux dernières, que l'adjuvant est préparé à partir d'un mélange de fractions fine et grossière, que les cendres de rouille sont entreposées avant ou après le fractionnement jusqu'à ce que l'efflorescence des grains soit achevée (env. à 90 %) et que l'adjuvant de béton se compose d'au moins 20 % de fraction fine, le reste étant constitué de la fraction grossière.

2. Procédé selon la revendication 1, caractérisé par le fait que les cendres de rouille sont homogénéisées avant le fractionnement.

3. Procédé selon la revendication 1 ou 2, caractérisé par le fait que les cendres de rouille sont entreposées avant le fractionnement pendant au moins 4 semaines, de préférence pendant au moins 6 ou 8 semaines.

4. Procédé selon l'une des revendications 1 à 3, caractérisé par le fait qu'avant le fractionnement, les métaux sont séparés, notamment dans un séparateur magnétique.

5. Procédé selon l'une des revendications 1 à 4, caractérisé par le fait qu'une cendre avec une part d'au moins 65 % de scories, une part d'au moins 10 % de verre et de céramique, une part maximale de 5 % de métaux et des parts maximales de 0,5 % d'imbrûlés est employée, toutes ces indications étant en pour cent du poids.

6. Procédé selon l'une des revendications 1 à 5, caractérisé par le fait que les cendres de rouille sont entreposées à l'état sec.

7. Procédé selon l'une des revendications 1 à 6, caractérisé par le fait que la fraction fine contient 13 pour cent-poids d'une granulométrie inférieure à 1 mm, 20 pour cent-poids d'une granulométrie de 1 à 4 mm, 38 %-poids d'une granulométrie de 4 à 8 mm et que le reste de la granulométrie varie entre 8 et 12 mm, que la composante grossière contient 13 pour cent-poids d'une granulométrie allant jusqu'à 1 mm, 11 pour cent-poids d'une granulométrie de 1 à 4 mm, 16 pour cent-poids d'une granulométrie de 4 à 8 mm et que la part restante présente une granulométrie supérieure.

8. Procédé selon l'une des revendications 1 à 7, caractérisé par le fait qu'un adujvant pour béton est ajouté au béton frais dans un mélangeur à mélange forcé par un jet d'air comprimé et que cet adjuvant se compose de préférence d'un agent d'entraînement d'air et/ou d'un retardateur, la part d'adjuvant s'élevant à 0,5 à 2 %-poids du béton frais.

9. Procédé selon l'une des revendications 1 à 8, caractérisé par le fait que l'évolution et l'achèvement quasi total de l'efflorescence sont suivis par saisie de la température à l'intérieur d'une quantité de cendres de rouille entreposées et/ou par observation de l'efflorescence sur des échantillons.

10. Procédé selon l'une des revendications 1 à 9, caractérisé par le fait que, lors du débourbage dans le bain d'eau, des particules pulvérulentes d'une granulométrie inférieure à 50 micromètres, de préférence inférieure à 30 micromètres sont séparées.